(19) **Europäisches Patentamt**

**European Patent Office**

**Office européen des brevets**

(11) Veröffentlichungsnummer: **0 267 441**

**A2**

(12) # EUROPÄISCHE PATENTANMELDUNG

(21) Anmeldenummer: **87114861.5**

(22) Anmeldetag: **12.10.87**

(51) Int. Cl.⁴: **B29C 71/00 , B29C 47/08**

(30) Priorität: **04.11.86 DE 3637459**

(43) Veröffentlichungstag der Anmeldung:
**18.05.88 Patentblatt 88/20**

(84) Benannte Vertragsstaaten:
**AT BE CH DE ES FR GB GR IT LI LU NL SE**

(71) Anmelder: **Hewing GmbH & Co.**
**Waldstrasse 3**
**D-4434 Ochtrup(DE)**

(72) Erfinder: **Finke, Hans-Dieter, Dr.**
**Dachsweg 11**
**D-4434 Ochtrup(DE)**
Erfinder: **Hoeffker, Bruno**
**Johannesweg 8**
**D-4440 Rheine(DE)**
Erfinder: **Hoffmann, Manfred E.**
**Alt Metelner Weg 23**
**D-4434 Ochtrup(DE)**

(74) Vertreter: **Patentanwälte Schulze Horn und**
**Hoffmeister**
**Goldstrasse 36**
**D-4400 Münster(DE)**

(54) **Verfahren und Vorrichtung zur Herstellung von Kunststoffprofilen mit einer fluorierten Schicht.**

㊄

1. Verfahren und Vorrichtung zur Herstellung von Kunststoffprofilen mit einer fluorierten Schicht.

2.1 Um geringe Permeationsraten für Flüssigkeiten und Gase zu erhalten, werden Rohrstücke (Polyethylen) an ihrer Innen-und/oder Außenseite mit in Flüssigkeit gelöstem Fluor-Gas behandelt.

Es ist nachteilig, daß nur relativ kurze Rohrstücke fluoriert werden können, dabei bedingen niedrige Reaktionstemperaturen lange Behandlungszeiten.

Es stellt sich die Aufgabe, ein kontinuierlich durchführbares Fluorierungsverfahren mit variablen Reaktionszeiten anzuwenden.

2.2. Diese Aufgabe wird durch ein Verfahren gelöst, in dem bei der kontinuierlichen Extrusion von Kunststoffrohren die Innen-und/oder Außenfläche direkt nach dem Verlassen des Extruder-Kopfes oder im Anschluß an die Extrusion mit einem Fluor enthaltenden Gas behandelt wird. Die Reaktionszeit des Reaktionsgases wird entsprechend der Extrusionsgeschwindigkeit variiert.

2.3 Die Rohroberflächen werden zwecks Permeationserniedrigung von Flüssigkeiten und Gasen chemisch verändert.

Fig.1

## Verfahren und Vorrichtung zur Herstellung von Kunststoffprofilen mit einer fluorierten Schicht

Die Erfindung betrifft ein Verfahren und eine Vorrichtung zur Herstellung von Kunststoffprofilen, einschließlich Hohlprofilen, mit einer außen- und/oder innenliegenden fluorierten Schicht, die durch Reaktion elementaren Fluors mit der Innen- und/oder Außenseite des Profiles zustandekommt.

Aus der DE-PS 32 45 915, Beispiel 1, ist bekannt, ein Polyethylenrohr mit einer Flüssigkeit zu behandeln, in der elementares Fluor gelöst ist. Die Innen-Fluorierung wird vorgenommen, indem die Lösung durch das Rohr geleitet wird, wohingegen die Außenfluorierung in einem Bad erfolgt. Derartig behandelte Rohre weisen geringere Permeationsraten für Flüssigkeiten und Gase auf, verglichen mit unfluorierten Rohren.

Das Verfahren gemäß Stand der Technik hat sich grundsätzlich als durchführbar gezeigt. Bei der großtechnischen Rohrherstellung ergeben sich jedoch Nachteile. Es können immer nur kurze Rohrlängen behandelt werden, da bei längeren Rohrabschnitten relativ hohe Drücke des fluorhaltigen Fluids erforderlich sind, um eine gleichmäßige Beschickung zu erreichen. Aufgrund der relativ niedrigen Reaktionstemperatur ergeben sich vergleichsweise lange Behandlungszeiten.

Ferner wird in der DE-B 1 259 092 ein Verfahren zum Herstellen eines einschichtigen Schlauches aus thermoplastischem Kunststoff angegeben, bei dem neben Sauerstoff und Chlor Fluor als reaktives Gas genannt wird. Die genannte Beschreibung offenbart jedoch in ihren Anwendungsbeispielen nur die Verwendung von Chlor oder Sauerstoff, nicht jedoch die Anwendung von Fluor. Fluor unterscheidet sich jedoch von den genannten Gasen in seiner Reaktionsfähigkeit, in den Vorschriften zur Behandlung und auch in jeder anderen technologischen Hinsicht so weit, daß unter keinen Umständen von Anwendungsbeispielen, die auf der Verwendung von Chlor oder Sauerstoff basieren, auf die Anwendung von Fluor geschlossen werden kann.

Es stellt sich daher die Aufgabe, das aus der ersten Entgegenhaltung bekannte Verfahren dahingehend zu verbessern, daß ein kontinuierlich durchführbares Fluorierungsverfahren angegeben wird, welches nicht auf bestimmte, in Bäder passende kurze Rohrlängen beschränkt ist und bei dem keine Behandlungsfluide unter hohem Druck durch Rohre gefördert werden müssen.

Diese Aufgabe wird gelöst bei einem Verfahren der eingangs genannten Art, bei dem die Reaktion des Fluors während oder unmittelbar nach dem Formen des Profils mittels eines entsprechenden Werkzeuges an dem erhitzten, wenigstens teilweise plastifizierten Kunststoff, unter Belassung einer während des Formens erlangten oder nur unwesentlich erniedrigten Wandtemperatur mit einem elementares Fluor enthaltenden, reaktiven Gas innerhalb einer begrenzten Einwirkzone durchgeführt wird.

Das Verfahren wird demnach beispielsweise direkt beim Formen, insbesondere Extrudieren, im Werkzeug oder unmittelbar im Anschluß an die Extrusion durchgeführt. In diesem Zustand ist der Kunststoff noch erwärmt, so daß die Einwirkzeit des Fluors zur Erzielung einer ausreichend fluorierten Schicht nur sehr kurz sein muß. Die Einwirkung des Behandlungsgases ist dadurch in vorteilhafter Weise verbessert gegenüber einer erkalteten, d.h. kristallisierten Kunststoff-Schicht.

Das Verfahren gemäß Erfindung läßt sich sowohl bei der Profilherstellung im Extrusionsverfahren als auch im Preßsinter- oder RAM-Extrusions-Verfahren durchführen, beispielsweise in einem Engel-Extrusionsautoklaven. Diese Herstellungsverfahren für Profile und Rohre sind weitgehend bekannt. Es wird beispielsweise hingewiesen auf den Artikel von HOFFMANN, "Vernetzte Polyethylen-Rohre für Flächenheizungen" in der Zeitschrift Heizungs-Journal, Sonderausgabe 2/1981. Das ENGEL-Verfahren ist außerdem beschrieben in DE-OS 1 679 826. Anwendbar ist das Verfahren gemäß vorliegender Anmeldung auf verschiedene, fluorierbare, thermoplastische Kunststoffe, d. h. unter anderem auf Polymere oder Copolymere von Ethylen, Propylen, Styrol, Vinylacetat, Acrylnitril, Vinylchlorid und weitere. Das Verfahren ist generell für alle Kunststoffe anwendbar, die mit gasförmigem, elementarem Fluor reagieren. Hierfür ist eine sehr umfangreiche Patentliteratur vorhanden. Darüber hinaus ist es in vielen Fällen möglich, die Werkstoffeigenschaften der fluorierten Kunststoffprofile noch zu verbessern, indem sie zusätzlich mittels Elektronenbestrahlung vernetzt werden.

Da durch die Fluorierung der Kunststoff-Oberfläche eine Erhöhung der Oberflächenspannung bewirkt wird, lassen sich fluor-behandelte Kunststoffprofile bzw. -hohlprofile z. B. besser bedrucken und bekleben. Auf die fluorierte Schicht innen oder außen können durch Laminieren, Wickeln oder dergleichen weitere Kunststoff-Schichten aufgebracht werden, wie dies ebenfalls aus der Literatur bekannt ist. Die Profile können sowohl mit einer fluorierten Schicht innen, als auch außen, als auch auf beiden Seiten versehen sein.

Eine Vorrichtung zur Durchführung des Verfahrens umfaßt beispielsweise einen Extruder mit Extrusionswerkzeug, dem in der Regel eine Kalibriervorrichtung nachgeschaltet ist.

Üblicherweise ist im Dorn des Extrusionswerkzeuges (Rohrkopf) eine Bohrung vorhanden, über die das Lumen des entstehenden Schlauches belüftet wird. Über diese Bohrung, gegebenenfalls auch über zusätzliche Gaszufuhrkanäle, kann das Behandlungsgas direkt in den Einwirkbereich geführt werden. An dieser Stelle hat die Innenwandung des entsprechenden Hohlprofils die höchste Temperatur. Es erfolgt dann unmittelbar entweder im Düsenspalt oder im Anschluß an das Extrusionswerkzeug die Fluorierung. Durch die erhöhte Reaktionstemperatur wird ein rasches Abreagieren des Fluors bewirkt, so daß kurz hinter der Reaktionszone nur noch schwach fluorhaltiges Gas im Rohrlumen verbleibt. In ähnlicher Weise kann eine Außenwand-Fluorierung stattfinden, in dem im Bereich der Bügelzone des Extrusionswerkzeuges eine gasdurchlässige, hülsenförmige Fritte den Durchtritt des Behandlungsgases auf die Profilaußenseite gestattet.

Sollten an der Innenwand fluorierte Hohlprofile nach dem Preßsinter-bzw. RAM-Extrusions-Verfahren mittels eines Extrusionsautoklaven hergestellt werden, so ist an der Stirnwand des Werkzeugdornes ebenfalls eine Bohrung vorhanden, durch die das Behandlungsgas einströmen kann.

Eine Außen-Fluorierung von Voll-und Hohlprofilen ist möglich, indem entweder eine gasdurchlässige, hülsenförmige Fritte in die Düse eingebaut oder eine Behandlungkammer dem Werkzeug nachgeschaltet wird.

Weitere Einzelheiten der Vorrichtung gehen aus der nachfolgenden Beschreibung der Zeichnung hervor. Die Figuren der Zeichnung zeigen:

Figur 1 ein modifiziertes Düsen-Austrittsstück eines Extrusionswerkzeuges (Rohrkopf);

Figur 2 ein Extrusionswerkzeug mit einer anderen Ausführung des Fluorierungsbereiches;

Figur 3 einen gemäß Erfindung modifizierten Preßsinter-Autoklaven (sogenannter Engel-Extrusionsautoklaven).

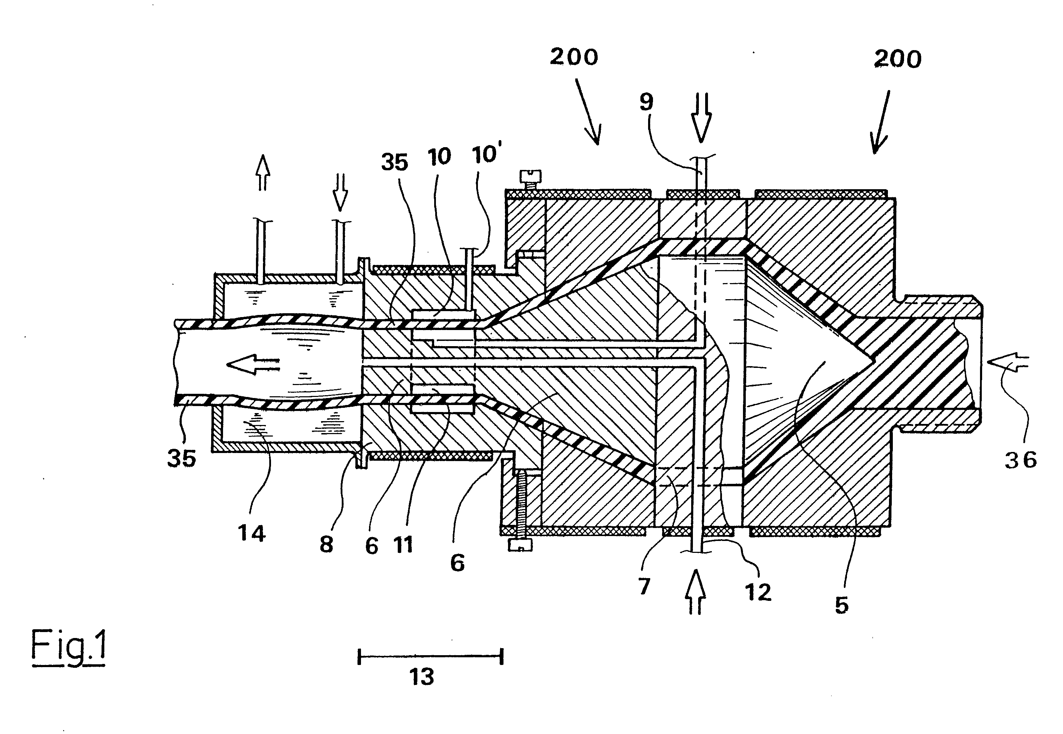

In Figur 1 ist ein Teil, nämlich insbesondere das Extruder-Mundstück, mit den nachfolgenden Fluorisierungsvorrichtungen dargestellt. Der Extruder, der bis auf die gemäß Erfindung erforderlichen Modifikationen konventionellen Extrudern entspricht, setzt sich aus einer druckerzeugenden Förderung (Pfeil 36), einem das extrudierte Profil, Rohrpreßling 35, formenden Verdrängungskörper 5 mit Gehäuse 200 und einer, den Rohrpreßling richtenden Kalibriervorrichtung 300, mit Kühlung, zusammen.

Die druckerzeugende Förderung besteht aus einer nicht dargestellten Schneckenpresse, die in das Gehäuse 200 zum Verdrängungskörper 5 überleitet und das Kunststoff-Material verdichtet. Die Schneckenpresse umgeben Heizbäder, die das Kunststoff-Material auf die für die Extrusion notwendige Temperatur erhitzen. Die dabei frei werdende Reibungswärme und die Heizbäder heizen das Kunststoff-Material derart auf, daß eine durchgehend homogene, plastifizierte Masse entsteht, die am Ende die Schneckenpresse unter hohem Druck verläßt.

Das in plastischer Form vorliegende Kunststoff-Material tritt in das Gehäuse 200 mit dem Verdrängerkörper 5 ein, der innerhalb des Gehäuses montiert ist. Das Ende des Verdrängerkörpers 5 bildet ein Dorn 6, der über Dornhalter 7 in seiner Stellung fixiert ist. Das Gehäuse 200 geht in eine Düse 8 über, die als Zylinder den Dorn 6 umgibt. Dorn 6 und Düse 8 lassen einen Freiraum, in dem der Rohrpreßling 35 zu liegen kommt.

Das Kunststoff-Material, welches beim Verlassen der druckerzeugenden Förderung unter hohem Druck in plastischer Form vorliegt, wird in den Verdrängerkörper 5 mit Gehäuse 200 gepreßt. Dabei wird das Material durch die Spitze des Dornes 6 geteilt. Es strömt an den Außenwänden des Dornes 6 und an den Innenwänden des Gehäuses 8 entlang. Auf dem Wege werden dabei die Stege der Dornhalter 7 passiert. Der Dorn 6 und das Gehäuse 200 legen bei diesem Prozeß die spätere Gestalt des aus dem Rohrpreßling 35 entstehenden Rohres fest.

Durch die Dornhalter 7 kann in das Innenlumen des Rohrpreßlings 35 mittels eines Zuführkanals 12 ein Gas eingeleitet werden, wobei bei konventionellen Extrudern hierdurch Druckluft geleitet werden, nämlich ein fluorhaltiges, reaktives Gas. Darüber hinaus ist ein weiterer Gaszufuhrkanal 9 vorgesehen, über den das reaktive Gas eingeblasen werden kann. Der Zufuhrkanal 12 endet am stumpfen Teil des Dornes 6. Der Zufuhrkanal 9 dagegen versorgt eine hülsenförmige Fritte 11, die in der Zylinderwandung des Dornes 6 plaziert ist. Hiermit wird der Rohrpreßling 35 innen fluoriert. Auf etwa gleicher axialer Länge des Extruders befindet sich an der Innenwandung der Düse 8 eine hülsenförmige Fritte 10, über die der Rohrpreßling 35 außen fluorierbar ist. Diese Fritte 10 wird über einen schematisch dargestellten Kanal 10' mit Fluor versorgt.

Beide Fluorierungsmöglichkeiten können auch gleichzeitig durchgeführt werden. Das Kunststoff-Material, das an den Fritten 10 und 11 vorbeigleitet, weist eine Temperatur auf, die nur wenig unter der Temperatur innerhalb des Gehäuses 200 liegt. Diese hohe Temperatur des Kunststoff-Materials hat zur Folge, daß das Behandlungsgas mit einer hohen Reaktionsgeschwindigkeit mit dem Rohrmaterial rea giert, da das Behandlungsgas in die Rohrwandung wegen der hohen Diffusionsgeschwindigkeit gut eindringen kann und daß das Behandlungsgas alle Kunststoff-Bereich durchdringen kann, da eine Auskristallisierung des

BAD ORIGINAL

Kunststoff-Materials nicht vorliegt.

Beim Verlassen der Düse 8 und des Dornes 6 hat der Rohrpreßling seine äußere Form erhalten. Dabei bleibt er auf einem relativ hohen Temperaturniveau, das wesentlich über 50°C liegt.

Es ist deshalb möglich, eine gewisse Strecke hinter der Mündung der Düse 8 eine Außenfluorierung zu ermöglichen, die alternativ zu der Behandlung mittels der außen liegenden Fritte 10 zu sehen ist. Demnach kann eine Behandlungskammer 14 vorgesehen werden, die der Kalibriervorrichtung 15 nachgeschaltet ist. Eine solche Kammer ist abgedichtet um die Rohrwandung herum gelegt und wird kontinuierlich mit Behandlungsgas beschickt.

Demnach sind verschiedene Möglichkeiten vorgesehen, wie das reaktive Gas an die Wandungen des Rohrpreßlings 35 gelangt. Einmal kann das Gas in der sogenannten Bügelzone im Bereich der Dorn-Außenwandung, in der eine begrenzte Einwirkzone ausgebildet ist, an die Innen-oder Außenwandung des Rohrpreßlings gelangen. Es erfolgt jeweils innerhalb einer begrenzten Einwirkzone die Fluorbehandlung, da die Reaktion durch die hohe Temperatur und die hohe Konzentration des Fluors unmittelbar auf die nahe dem Extrusionswerkzeug befindliche Zone beschränkt ist.

Das Innenlumen des Rohrpreßlings am Ende des Dornes 6 kann darüber hinaus ebenfalls direkt über einen Zufuhrkanal mit einem Gasvorrat verbunden werden, so daß auch in diesem Bereich eine Fluorierung möglich ist.

Insgesamt ist bei dem Fluorierungsprozeß zu beachten, daß die Produktionsgeschwindigkeit des Rohrpreßlings 35 sehr unterschiedlich sein kann. Sie liegt in der Größenordnung weniger Zentimeter bis zu mehreren Metern pro Minute. Der Fluorierungsprozeß muß sich in seinen Parametern hierauf einstellen. Das gilt insbesondere für die Fluorkonzentration im Behandlungsgas, für den Druck des Gases und für die Reaktionstemperatur. Üblicherweise ist daher die Hauptmenge des Behandlungsgases ein Inertgas, wie Stickstoff, ein Edelgas oder ein Gemisch davon. Das Behandlungsgas enthält üblicherweise zwischen 5 - 40 Gew.-% Fluor. Dem Behandlungsgas können auch weitere Gase beigemischt werden, wie z. B. Sauerstoff, Chlor, Brom, Schwefeldioxid, Schwefeltrioxid, Kohlenmonoxid oder Kohlendioxid. Vorzugsweise liegt die Oberflächentemperatur des Profils bei Zutritt des Behandlungsgases im Bereich von 50 - 300°C. Der Druck des Behandlungsgases ist abhängig von der räumlichen Anordnung der Behandlungsgas-Zuführung und liegt üblicherweise im Bereich von 50 mbar bis 4 bar.

Nach dem Einwirken des Behandlungsgases wird der nichtreaktive Teil mit einem Spülgas ausgespült und einer Entsorgung zugeführt. Vorzugsweise wird das Behandlungsgas insgesamt in einem Kreislauf zugeführt. Gegebenenfalls auftretende Verunreinigungen, u. a. HF, werden kontinuierlich entfernt.

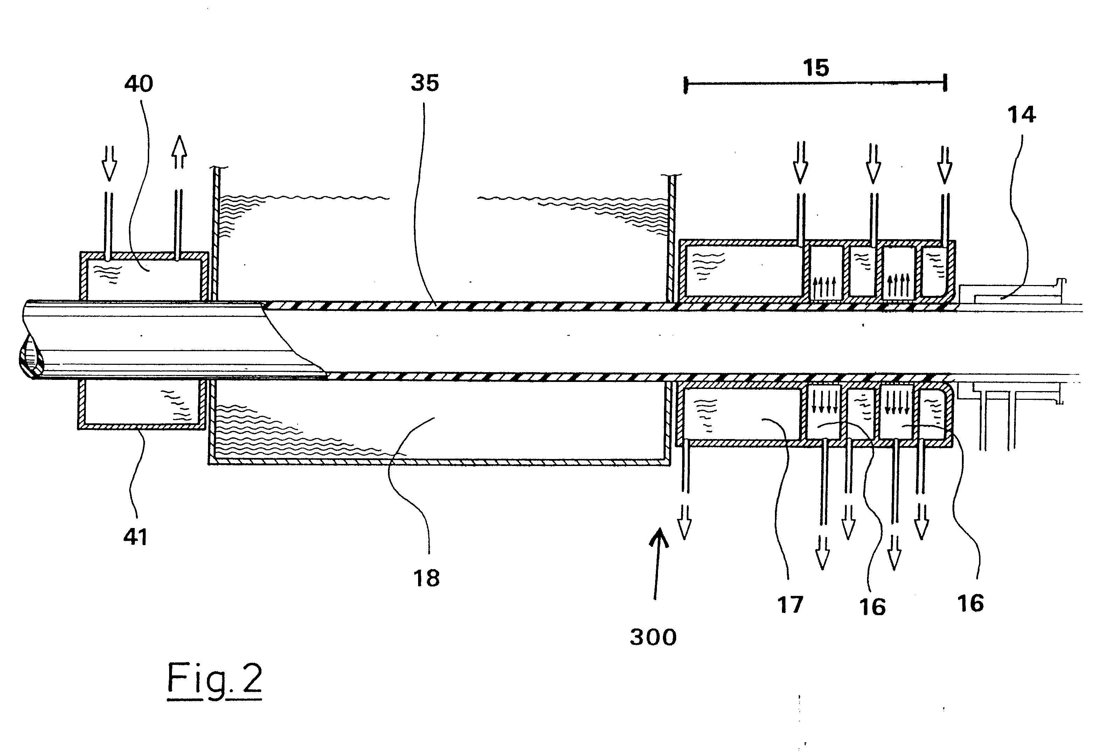

Figur 2 zeigt eine Vorrichtung mit einer der gekühlten Kalibriereinrichtung 15 nachgeschalteten Kühlstrecke 18. Wird diese Kühlstrecke so bemessen, daß die Temperatur des Rohres beispielsweise nicht unter 50°C absinkt, so ist es sinnvoll, eine weitere Fluorierungszone 40 vorzusehen. Hierbei wird eine den Rohrpreßling 35 außen umfassende Behandlungskammer 41 mit Behandlungsgas beschickt (schematisch dargestellt). An die Fluorierungskammer 41 können sich weitere Kühlstrecken oder Fluorierungskammern anschließen.

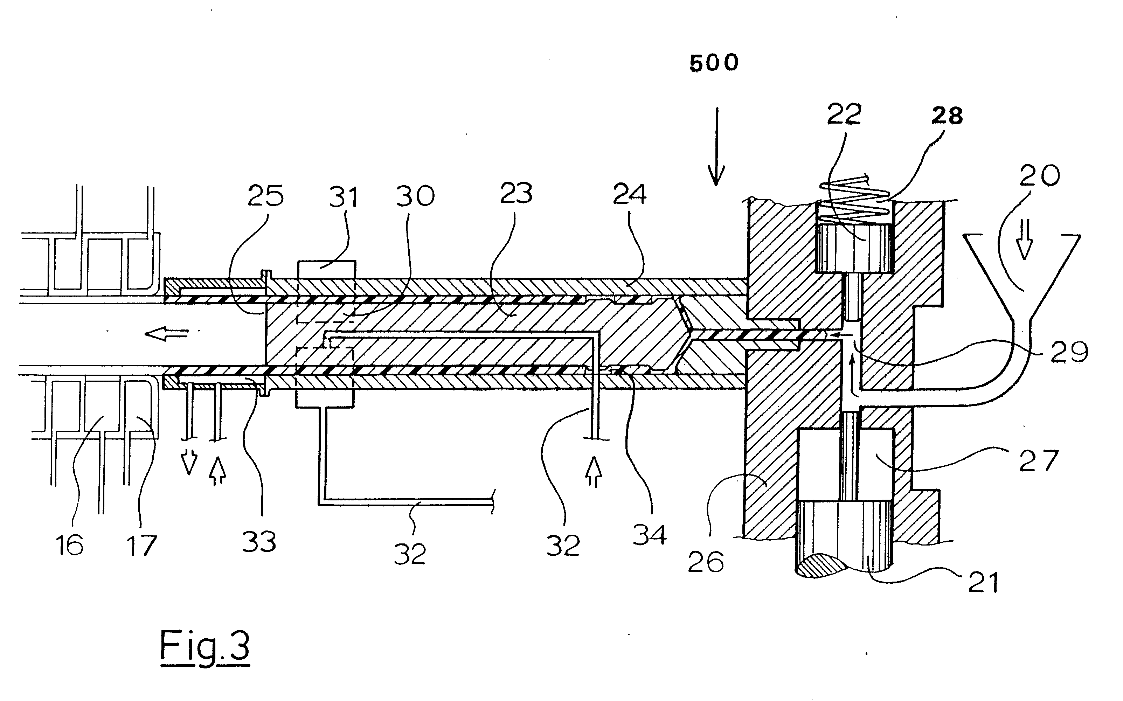

In Figur 3 ist eine weitere wichtige Ausführungsform dargestellt. In dieser Figur sind die technischen Einzelheiten für das Verfahren bei der Herstellung von Profilen, einschließlich Hohlprofilen, durch Preßsintern mit einem Extrusionsautoklaven unter Zuhilfenahme eines beheizten Zylinders und/oder eines Dornes dargestellt. Ein derartiges Verfahren ist beispielsweise unter dem Namen "Engel-Extrusionsautoklaven-Verfahren" bekannt. Dabei wird in einem Extrusionsautoklaven 500 sowohl die druckerzeugende Förderung als auch die Formung vorgenommen. In dem Autoklaven wird das Kunststoff-Material hochgradig komprimiert und in der endgültigen Form eines Rohres fixiert. Der Autoklav 500 weist ein Gehäuse 26 auf, in dem sich zwei Zylinder, nämlich ein Zylinder 27 für einen Preßstempel 21 und ein Zylinder 28 für einen Gegendruck-Preßstempel 22, befinden. Die beiden Zylinder 27 und 28 sind über eine Leitung 29 verbunden, in die auch ein Einfüllstutzen 20 hineinragt. Die Leitung 29 geht in den Bereich über, in dem sich ein Dorn 23 befindet, der von einem beheizten Zylinder 24 umgeben ist. Auf der gegenüberliegenden Seite zur Einlaßstelle, die durch die Leitung 29 gebildet wird, befindet sich eine Austrittsstelle 25. Der Dorn 23 ist durch Dornhalter 34 fixiert. Durch einen der Dornhalter 34 ist eine Behandlungsgas-Zufuhrleitung 32 verlegt, die mit einer Fritte 30, die hülsenförmig den Dorn umgibt, verbunden ist. Auf etwa gleicher Höhe liegt an der Innenwandung des beheizten Zylinders 24 ebenfalls eine hülsenförmige Fritte 31, die für eine Außenfluorierung vorgesehen ist.

Alternativ zu der Fluorierung mittels der Fritte 31 befindet sich außerhalb der Austrittsöffnung 25 eine Vorrichtung 33, mit der ebenfalls eine Außenfluorierung mit Hilfe einer umgebenden Kammer durchgeführt werden kann. Im Anschluß an die Rohrentstehung folgt auch bei diesem Verfahren eine Kalibrierung und eine Abkühlung. Hierfür wird im allgemeinen ein Kühlwasser-Bad 17 verwendet. Anschließend durchläuft der Rohrpreßling 35 noch

BAD ORIGINAL

ein Wasserbad 18. wie dies in Figur 2 dargestellt ist. zur Abkühlung. Dieser Prozeß ist demnach vergleichbar mit dem zuvor beschriebenen Extrusionsverfahren.

Im Gegensatz zum konventionellen Extrusionsverfahren wird beim Engel-Extrusionsautoklav-Verfahren das Rohr stoßweise und diskontinuierlich geformt. Das Engel-Verfahren verwendet üblicherweise auch keine homogene Kunststoff-Masse, sondern ein nur teilgeschmolzenes Granulat mit kleineren Kunststoff-Stückchen. Sowohl das stoßweise Extrudieren als auch die inhomogene Konsistenz des Kunststoff-Materials bedingen eine angepaßte Methode der Fluorierung. So muß bei der Fluorierung ebenfalls pulsartig gearbeitet werden. Weiterhin ist in Kauf zu nehmen, daß bei dem Fluorierungsprozeß nicht das gesamte Kunststoff-Material homogen reagieren kann, sondern daß das Kunststoff-Material entsprechend seiner Konsistenz an bestimmten Kristallisationsgrenzen stärker reagiert.

Insgesamt ergeben sich jedoch auch bei diesem Verfahren zufriedenstellende Ergebnisse.

Weitere Einzelheiten der Erfindung werden anhand von Beispielen erläutert.

## Beispiel 1

Aus einem Polyethylen-Compound, bestehend aus Polyethylen der Dicht 0,943 g/cm$^3$ und Wärmealterungsstabilisatoren wurde im Extrusionsverfahrenein PE-Röhrchen der Dimension 8 × 1 mm hergestellt. Die Extrusionslinie bestand aus einem Einschneckenextruder mit einem Schneckendurchmesser von 45 mm und einer Schneckenlänge vom 24fachen Durchmesser, einem Rohrwerkzeug, einer Vakuumtank-Kalibrierung mit nachgeschalteten Kühlbädern sowie Signiervorrichtung und Abzug. Das Rohrwerkzeug war mit einem Stegdornhalter versehen, der Bohrungen für den Luftdurchtritt sowie auch für das Behandlungsgas aufwies. Alle gasberührenden Teile waren in Edelstahl ausgeführt. Der Dorn enthielt im Bereich der Bügelzone einen Fritteneinsatz, der an die gasführende Bohrung angeschlossen war. Durch diese Fritte wurde das Behandlungsgas auf die durch die Bügelzone strömende Polyethylenschmelze geleitet. Die Temperatur der Polyethylenschmelze betrug 220°C.

Das im thermoplastischen Zustand befindliche Rohr wurde nach Austritt aus der Düse in einer Vakuumtank-Kalibrierung kalibriert, in nachfolgenden Kühlbädern gekühlt und aufgewickelt. Das bei der Fluorierung entstandene HF wurde anschließend mit Stickstoff als Spülgas entfernt und über einen HF-Absorber geleitet.

Ein 4 m-Stück eines auf solche Weise behandelten Röhrchens wurde ebenso wie ein nicht behandeltes Röhrchen gleichen Werkstoffes und gleicher Dimension einem Permeationstest mit Superbenzin unterzogen. Während das unbehandelte Röhrchen nach einer Teit von 60 Tagen starke Verformungen durch Quellung und das gefüllte Röhrchen einen Gewichtsverlust von 53 % aufwies, war am fluorierten Röhrchen keinerlei Verformung festzustellen und der Gewichtsverlust betrug nur 4 %.

## Beispiel 2

Mittels eines Engel-Extrusionsautoklaven wurde in einer Art RAM-Extrusionsverfahren (Preßsintern) ein vernetztes Polyethylen-Rohr (VPE-Rohr) der Dimension 32 × 4,4 mm gefertigt. Als Rohstoff wurde ein griesförmiges, hochmolekulares Polyethylen hoher Dichte (Lupolen 5261 Z der BASF) eingesetzt. Es war in einem separaten, dem Verarbeitungsprozeß vorgeschalteten Aufbereitungsprozeß mit Wärmestabilisatoren und einem organischen Peroxid (Ditertiärbutylperoxid) als Radikalbildner vermischt worden. Die vernetzungsfähige Mischung wurde in dem sogenannten Engel-Extrusionsautoklaven unter hohem Kolbendruck verdichtet, in den Korngrenzen plastifiziert, gefördert, zu einem Rohr geformt und währenddessen vernetzt. Das Rohrwerkzeug bestand aus einem langen beheizten Zylinder, in dem ein Dorn zur Ausbildung des Hohlraumes über Stege gehalten wurde. Dorn und Düse waren zur Verminderung der Wandhaftung des vernetzten Polyethylen-Rohres bei Temperaturen über dem Kristallschmelzbereich mit Polytetrafluorethylen (Teflon) beschichtet. Das vernetzte Rohr trat mit einer Geschwindigkeit von 1,1 m/min aus dem Werkzeug aus und hatte eine Temperatur von 230°C.

Zur Fluorierung der inneren Oberfläche des austretenden VPE-Rohres wurde dieses mit einer $F_2/N_2$-Mischung im Verhältnis 20 : 80 behandelt. Dornhalter und Dorn waren derart ausgebildet, daß das Behandlungsgas über die Stirnseite des Dornes ins Rohrinnere geleitet wurde. Das eingebracht Fluor reagierte gemäß dem stöchiometrischen Gesetzen mit dem C-Molekülen der VPE-Molekülketten unter gleichzeitiger Bildung von Fluorwasserstoff (HF). Daher wurden die Rohre nach der Extrusion mit Stickstoff gespült und das HF über einen HF-Absorber entsorgt.

Nicht fluorierte VPE-Rohre zeigten nach Befüllen mit Cyclohexan nach 6 Monaten einen Gewichtsverlust von 22 %, während die gleichen VPE-Rohre in fluorierter Ausführung dagegen nur einen Gewichtsverlust von < 1 % aufwiesen.

Beispiel 3

Aus einem Polyethylen-Compound, bestehend aus Polyethylen der Dichte 0,943 g/cm³, Wärmealterungsstabilisatoren und einem schwarzen Farbruß zur Erhöhung der UV-Beständigkeit wurde im Extrusionsverfahren ein PE-Röhrchen der Dimension 6 × 1 mm hergestellt. Die Extrusionslinie sowie die Fluorierungsmethode entsprechen derjenigen des Beispiel 1.

Die fluorierten Polyethylen-Röhrchen wurden anschließend mittels schneller, energiereicher Elektronen vernetzt. Zu diesem Zweck wurden die Röhrchen mit einer Geschwindigkeit von 250 m/min unter einem Elektronenstrahl mehrfach gedreht und gewendet durchgezogen. Die applizierte Dosis betrug 120 kGy. Der als Vernetzungsgrad gemessene Gelgehalt betrug 73 %.

Durch die Elektronenstrahlvernetzung wurde die im Fluorierungsprozeß erhaltene Belegung der Polyethylen-Oberfläche mit Fluor nicht gestört. Bei einer Füllung mit Haltermann-Testkraftstoff M 15 hatten unvernetzte und nicht fluorierte gefüllte Röhrchen von 4 m Länge im Zeitraum von 2 Monaten einen Gewichtsverlust von 57 %, während er beim fluorierten, als auch beim fluorierten und anschließend vernetzten PE-Röhrchen lediglich 6 % betrug. Das vernetzte und fluorierte Röhrchen zeigte gegenüber dem unvernetzten fluorierten wie auch nicht fluorierten Röhrchen ein deutlich höheres mechanisches Niveau. Die Reißdehnung stieg um 30 % an, die Kurven der Zeitstandfestigkeit im Innendruckversuch waren flacher ohne den bei thermoplastischen Polyolefin-Rohren charakteristischen Knick aufzuweisen, und die Beständigkeit gegen Spannungsrißbildung war verbessert.

Beispiel 4

Ein Rechteck-Hohlprofil aus Polypropylen in den Maßen 40 mm × 15 mm und einer Wanddicke von 1,5 mm mit zwei innenliegenden Stegen wurde im Extrusionsverfahren hergestellt. Als Extruder wurde ein Einschneckenextruder mit einem Schneckendurchmesser von 60 mm und einer wirksamen Schneckenlänge von 30fachen Durchmesser eingesetzt. Das Profilwerkzeug war in üblicher Weise ausgelegt. Als Kalibrierung diente eine Vakuumtank-Kalibrierung, in der das eigentliche Kalibrierwerkzeug als geschnitzter Block im Wasserbad liegend integriert war. Die Extrusionslinie wurde durch Kühlbäder, Bedruckungstation, Profilabzug und Profilsäge mit Abwurfrinne komplettiert. Die Extrusionsgeschwindigkeit betrug 2 m/min, die Temperatur des aus der Düse austretenden Profils 225°C.

Zum Zwecke der Fluorierung der äußerer Oberfläche wurde die Vakuumtank-Kalibrierung mittels einem Distanzzylinder aus Edelstahl an das Profilwerkzeug gasdicht angeflanscht. Der Zylinder war mit Ein-und Austrittsöffnungen für das Behandlungsgas versehen und somit als Fluorierungskammer ausgebildet. Das F$_2$/N$_2$-Gemisch der Zusammensetzung von 10 : 90 Vol.% wurde im Kreislauf gefahren und kontinuierlich über eine Absorptionskolonne von anfallenden HF befreit.

Die auf diese Weise oberflächenbehandelten PP-Profile aus Polypropylen-Random-Copolymerisat (PP-R) wiesen nach dem Fluorieren eine wesentlich höhere Oberflächenspannung (gemessen nach DIN 53364) auf als unbehandelte Profile. Die Vergleichswerte waren 50 dyn/cm gegenüber 33 dyn/cm. Somit war eine wesentlich bessere Bedruckbarkeit gegeben.

Beispiel 5

Es wurde das in Beispiel 4 beschriebene Profil aus Polypropylen so hergestellt, daß die Fluorierungskammer nicht zwischen Profilwerkzeug und Vakuumtank-Kalibrierung, sondern nach der Vakuumtank-Kalibrierung als separate, mit Schleusen versehene Kammer ausgebildet war. Zur Trocknung der mit Kühlwasser benetzten Rohre war in die Eintrittschleuse eine zusätzliche Vakuumkammer integriert. Da in diesem Fall die Profile bereits auf Temperaturen von ca. 100°C abgekühlt waren, konnte die Konzentration des Behandlungsgases von 40 % F$_2$ in N$_2$ gesteigert werden. Die Erhöhung der Oberflächenspannung nach dem Fluorieren entsprach derjenigen des Beispiels 4.

Beispiel 6

Ein Rohr 10 × 1 mm aus Polyamid 6 (PA6) wurde im Extrusionsverfahren hergestellt. Die Extrusionslinie bestand aus einem Einschneckenextruder mit einem Schneckendurchmesser von 45 mm und einer wirksamen Schneckenlänge vom 25fachen Durchmesser mit angeflanschtem Rohrkopf, einer Vakuumtank-Kalibrierung mit nachgeschalteten Wasserbädern, einer Signierapparatur, einem Abzug und einem Aufwickler. Der Rohrkopf war in seiner Geometrie konventionell aufgelegt, lediglich Dorn und Düse waren im Bereich der Bügelzone teilweise durch Einbau von Sintermetallbuchsen als Fritten ausgeführt. Diese Fritten waren über Bohrungen im Rohrkopf an eine Leitung für das Behandlungsgas F$_2$/N$_2$ angeschlossen. Auf diese Weise konnten während der Extrusion die durch den Durchmesserunterschied zwischen Düse und Dorn gebildeten ringförmigen Spalt durchströmende Schmelze von außen und innen fluoriert werden.

Die so extrudierten und fluorierten PA-Rohre wiesen gegenüber nicht fluorierten PA-Rohren gleicher Dimension und gleichen Rohstoffes eine um 95 % verminderte Permeationsrate bei Füllung mit Xylol auf.

Die Temperatur der Schmelze betrug 260°C. Die Abzugsgeschwindigkeit des Rohres betrug 9,5 m/min.

Beispiel 7

Aus thermoplastisch verarbeitbarem, gummielastischem Polyurethan (PUR) wurde auf einer konventionellen Extrusionslinie wie in Beispiel 1 beschrieben ein flexibler Schlauch in den Maßen 20 mm Außendurchmesser und 3 mm Wanddicke bei einer Schmelzetemperatur von 200°C extrudiert. Die Düse des Rohrwerkzeuges war im Bereich der Bügelzone mit einer Frittenbüchse versehen, über die die vorbeiströmende Schmelze, d. h. der geformte Schlauchpreßling auf seiner äußeren Oberfläche fluoriert wrden konnte. Als Behandlungsgas wurde ein F₂/N₂-Gemisch mit einer Fluorkonzentration von 30 % eingesetzt.

Bei der Prüfung des Quellverhaltens von auf diese Weise fluorierten und an den beiden Enden verschlossenen Rohrabschnitten durch Lagerung in Benzol wurde lediglich eine Gewichtszunahme von 0,8 % festgestellt, während die gleichen, jedoch nicht fluorierten Schläche 14 % Gewichtszunahme hatten.

Beispiel 8

Ein geschäumtes Polyethylen-Profilband mit einer Dichte von 30 g/l und den Querschnittsmaßen von 150 mm × 8 mm wurde auf einer Schaumextrusionsanlage, bestehend aus einer Kaskadenextruder-Einheit mit Flachdüse sowie nachgeschalteten Wasserbädern und Bandwickler hergestellt. Als Polyethylen-Compound wurde ein Gemisch aus Polyethylen niedriger Dichte (LDPE), Thermostabilisator, Hilfsstoffe (Keimbildner) und Natriumbicarbonat als chemisches Treibmittel verwendet. Dieses Compound wurde im Extruder 1 der Kaskadenextrusions-Anlage aufgeschmolzen und über einen Adapter als Schmelze in den Extruder 2 eingeleitet. Im Bereich des Adpaters wurde außerdem 6 % Frigen 11 und 12 im Mischungsverhältnis 1 : 1 als physikalisches Treibmittel zugegeben. Aus der Flachdüse an Extruder 2 trat ein geschäumtes Polyethylenband aus, welches in nachfolgenden Wasserbädern und anschließender Lufttrocknungsstrecke als Rolle aufgewickelt wurde. Nach dem ersten Wasserbad war eine Lufttrocknungsstrecke angeordnet und danach eine Fluorierungskammer mit Eintritt-und Austrittsschleusen on line integriert. Bei Eintritt des PE-Bandes in die Schleuse der Fluorierungskammer betrug die Oberflächentemperatur 80°C. Die Extrusionsgeschwindigkeit betrug 40 m/min. Die Fluorierungskammer war an eine Begasungseinheit angeschlossen, aus dem kontinuierlich das bei der Fluorierung anfallende Nebenprodukt HF über einen mit Natronlauge arbeitenden Wäscher entsorgt wurde. Die Verweilzeit (Behandlungszeit) des geschäumten PE-Bandes in der Fluorierungskammer betrug 1 s. Die Fluorierung bewirkte eine Erhöhung der Oberflächenspannung gegenüber dem unbehandelten PE-Schaum von 29 auf 54 dyn/cm. Damit wurde die Bedruckbarkeit und Beklebbarkeit erheblich verbessert.

Beispiel 9

Ein strukturgeschäumtes Vollprofil aus "PVC hart" mit dem Querschnitt 100 mm × 10 mm wurde im Extrusionsverfahren hergestellt. Als Treibmittel diente Azodicarbonamid. Die geometrische Ausbildung des Profilwerkzeuges war den bei der Schaumextrusion bekannten Schwierigkeiten angepaßt. Die Kalibrierung des bei einer Schmelztemperatur von 180°C extrudierten Profiles war als Blockkalibrierung ausgebildet, am Profilwerkzeug angeflanscht und mit einem wassergekühlten Mantel versehen. Anschließend war eine mit Schleusen versehene Fluorierungskammer angeordnet. Das geschäumte PVC Hart-Profil wurde mit einer Geschwindigkeit von 1 m/min extrudiert. Die Fluorierungskammer hatte eine Länge von 1 m, so daß sich eine Einwirkzeit der F₂/N₂-Mischung (Konzentration 10 %/90%) von 1 min ergab. Die Oberflächentemperatur des in die Fluorierungskammer eintretenden Profiles betrug 60°C.

Die fluorierten Profile wiesen gegenüber unbehandelten Profilen eine um 15 dyn/cm erhöhte Oberflächenspannung auf und ließen sich sehr gut bedrucken bzw. mit einer PVC-Folie kaschieren.

Bezugszeichenliste

200 Gehäuse
300 Kalibriervorrichtung
500 Extrusionsautoklav
5 Verdrängungskörper
6 Dorn
7 Dornhalter
8 Düse
9 Gaszufuhrkanal

10 Hülsenförmige Fritte (außen)
10' Kanal
11 Hülsenförmige Fritte (innen)
12 Zufuhrkanal
14 Behandlungskammer
15 Kalibriereinrichtung
16 Sieb
17 Kühlung mit Kühlwasser
18 Kühlstrecke
20 Einfüllstutzen
21 Preßstempel
22 Gegendruck-Preßstempel
23 Dorn
24 beheizter Zylinder
25 Austrittsöffnung
26 Gehäuse
27 Zylinder für 21
28 Zylinder für 22
29 Leitung
30 Fritte hülsenförmig innen
31 Fritte hülsenförmig außen
32 Behandlungsgas-Zufuhrleitung
33 Vorrichtung zur Außenfluorierung
34 Dornhalter
35 Rohrpreßling
36 Druckerzeugende Förderung
40 Fluorierungszone
41 äußere Behandlungskammer

**Ansprüche**

1. Verfahren zur Herstellung von Kunststoffprofilen, einschließlich Hohlprofilen, mit einer innen- und/oder außenliegenden fluorierten Schicht, die durch Reaktion elementaren Fluors mit der Innen- und/oder Außenseite des Profiles zustandekommt, dadurch gekennzeichnet, daß die Reaktion des Fluors während oder unmittelbar nach dem Formen des Profils mittels eines entsprechenden Werkzeuges an dem erhitzten, wenigstens teilweise plastifizierten Kunststoff, unter Belassung einer während des Formens erlangten oder nur unwesentlich erniedrigten Wandtemperatur mit einem elementares Fluor enthaltenden, reaktiven Gas innerhalb einer begrenzten Einwirkzone durchgeführt wird.

2. Verfahren nach Anspruch 1, angewandt bei der Extrusion von Hohlprofilen, bei dem das Profil in einem aus Dorn und Düse gebildeten Werkzeug geformt und anschließend kalibriert wird, dadurch gekennzeichnet, daß das reaktive Gas durch eine Bohrung innerhalb des Dorns in das Lumen der Profile geleitet wird und/oder in der sogenannten Bügelzone im Bereich der Düsen-Innenwandung, in der eine begrenzte Einwirkzone ausgebildet ist, an die Außenwandung der Profile gelangt.

3. Verfahren nach Anspruch 2, dadurch gekennzeichnet, daß das reaktive Gas in der Bügelzone im Bereich der Dorn-Außenwandung, in der eine begrenzte Einwirkzone ausgebildet ist, an die Innenwandung des Rohres gelangt.

4. Verfahren nach Anspruch 1, angewandt bei der Extrusion von Hohlprofilen, bei dem ein Profil in einem aus Dorn und Düse gebildeten Werkzeug geformt und anschließend kalibriert wird, dadurch gekennzeichnet, daß der Profilaußenfläche das reaktive Gas innerhalb einer zwischen Werkzeug und Kalibriervorrichtung oder der Kalibriervorrichtung nachgeschalteten Reaktionskammer zugeführt wird.

5. Verfahren nach Anspruch 1, angewandt bei der Herstellung von Profilen, einschließlich Hohlprofilen, durch Preßsintern mit einem Extrusionsautoklaven unter Zuhilfenahme eines beheizten Zylinders und/oder eines Dorns, dadurch gekennzeichnet, daß das reaktive Gas durch eine Dornbohrung an der Stirnseite des Dorns austritt und/oder in einem beheizbaren Bereich der Zylinder-Innenwandung des Extrusionsautoklaven einwirkt.

6. Verfahren nach Anspruch 1, dadurch gekennzeichnet, daß die Hauptmenge des reaktiven Gases ein Inertgas, wie Stickstoff, ein Edelgas oder ein Gemisch davon ist, dem gegebenenfalls weitere Gase beigemischt werden, wie z. B. Sauerstoff, Chlor, Brom, Schwefeldioxid, Schwefeltrioxid, Kohlenmonoxid oder Kohlendioxid.

7. Verfahren nach Anspruch 6, dadurch gekennzeichnet, daß das reaktive Gas 5 bis 40 Gew.-% Fluor enthält.

8. Verfahren nach Anspruch 1, dadurch gekennzeichnet, daß die Oberflächentemperatur des Profils bei Zutritt des reaktiven Gases im Bereich von 50 bis 300°C liegt.

9. Verfahren nach Anspruch 1, dadurch gekennzeichnet, daß der Druck des reaktiven Gases während der Reaktion zwischen 50 mbar bis 4 bar liegt.

10. Verfahren nach Anspruch 1, dadurch gekennzeichnet, daß die fluorierten Profile nach der Fluorierung mit Elektronen bestrahlt werden.

11. Vorrichtung zur Durchführung des Verfahrens zur Herstellung von Kunststoffprofilen, einschließlich Hohlprofilen, mit einer innen-und/oder außenliegenden fluorierten Schicht, die durch Reaktion elementaren Fluors mit der Innen-und/oder Außenseite des Profiles zustandekommt, angewandt bei der Extrusion von Hohlprofilen, bei dem das Profil in einem aus Dorn und Düse gebildeten Werkzeug geformt und anschließend kalibriert wird, dadurch gekennzeichnet, daß über im Dorn (6) vorhandene und gegebenenfalls zusätzliche Gaszufuhrkanäle (9) das reaktive Gas dem Lumen des Preßlings (35) zuführbar ist.

12. Vorrichtung nach Anspruch 11. dadurch gekennzeichnet. daß der Dorn (6) auf einem Teil seiner dem Profilmaterial zugewandten Außenfläche mit hülsenförmigen Fritten (11) ausgestattet ist.

13. Vorrichtung nach Anspruch 11, umfassend einen konventionellen Extruder mit Extrusionswerkzeug und nachgeschalteter Kalibriereinrichtung, dadurch gekennzeichnet, daß im Bereich der sogenannten Bügelzone (13) des Werkzeuges eine gasdurchlässige, hülsenförmige Fritte (10) zum Durchtritt und Zutritt des reaktiven Gases zur Außenwand des Hohlprofils (35) vorgesehen ist.

14. Vorrichtung zur Durchführung des Verfahrens nach Anspruch 4, umfassend einen konventionellen Extruder mit Extrusionswerkzeug und nachgeschalteter Kalibriereinrichtung, dadurch gekennzeichnet, daß eine das Hohlprofil (35) außen umfassende Behandlungskammer (14) zwischen Werkzeug und Kalibriervorrichtung oder nach der Kalibriervorrichtung angeordnet ist.

15. Vorrichtung zur Durchführung des Verfahrens nach Anspruch 5, umfassend einen Extrusionsautoklaven mit Dorn, Dornhaltersteg und beheizbarem Zylinder, dadurch gekennzeichnet, daß über Behandlungsgas-Zufuhrleitungen (32) im Dornhalter (34) ein reaktives Gas zuführbar ist, das über eine an der Stirnwand des Dorns liegende Mündung ausströmt.

16. Vorrichtung nach Anspruch 15, umfassend einen Extrusionsautoklaven, dadurch gekennzeichnet, daß im Bereich eines aus dem beheizbaren Zylinder (24) und dem Dorn (23) gebildeten Ringspaltes kurz vor der Düsenaustrittsöffnung (25) hülsenförmige Fritten (30, 31) angebracht sind, die mit reaktiven Gas beschickbar sind.

17. Vorrichtung nach Anspruch 15, umfassend einen Extrusionsautoklaven, dadurch gekennzeichnet, daß entweder im Anschluß an den beheizbaren Zylinder (24) oder dem ersten Kühlblatt nachgeschaltet eine Reaktionskammer (33) angeordnet ist, in der die Außenfläche des Profils (35) mit reaktivem Gas fluoriert wird.

**Fig.1**

200  200

9

35  10  10'

14  8  6  11  6  7  12  5

13

36

0 267 441

40   35   **15**   **14**

41

**18**

**17   16   16**

**300**

## Fig.2

0 267 441

Fig.3